# EUROPEAN PATENT SPECIFICATION

(11) **EP 3 851 902 B1**
(45) Date of publication and mention of the grant of the patent: **02.10.2024**
(21) Application number: 20305026.5
(22) Date of filing: 15.01.2020
(51) Int. Cl.: G02C 13/00

(54) **METHOD FOR GENERATING MODIFIED EYEGLASS FRAME MANUFACTURING DATA**
VERFAHREN ZUR ERZEUGUNG VON MODIFIZIERTEN BRILLENGESTELL-HERSTELLUNGSDATEN
PROCÉDÉ DE GÉNÉRATION DE DONNÉES DE FABRICATION DE MONTURE DE LUNETTES MODIFIÉE

(43) Date of publication of application: 21.07.2021
(73) Proprietor: ESSILOR INTERNATIONAL, 94220 Charenton-Le-Pont (FR)
(72) Inventor: JORET, Paul, 94220 Charenton-Le-Pont (FR); AMIR, Bruno, 94220 Charenton-Le-Pont (FR); JOUARD, Ludovic, 94220 Charenton-Le-Pont (FR); REGO, Carlos, 94220 Charenton-Le-Pont (FR); HESLOUIS, Mélanie, 94220 Charenton-Le-Pont (FR)
(74) Representative: Plasseraud IP

(56) References cited:
- EP-A1- 1 011 006
- EP-B1- 1 011 006
- WO-A1-01/32074
- WO-A1-2016/176630
- WO-A1-2018/054718
- US-A1- 2015 055 085
- US-B1- 9 810 927

## Description

The present invention relates to the field of eyewear and more specifically to the field of personalized eyewear.

It is known for user to select from existing eyewear catalogue the eyewear he/she prefers.

It is also known to adapt an existing eyewear, so as to change the eyewear according to one's face morphology, using e.g. additive manufacturing, as disclosed, for instance, in any of US 2015/055085 A1, WO 2016/176630 A1 or WO 01/32074 A1.

It is also known to build from scratch an eyewear using additive manufacturing.

However, once the user chose an eyewear to his taste, the chosen eyewear may not be the particularly adapted to a specific activity for which the chosen eyewear was not intended to at the time of its conception. Likewise, the user may be unable to incorporate some specific features to the chosen eyewear.

There is thus a need to provide a method to modify an existing eyewear so as to make it compatible with a specific activity or feature for which the existing eyewear is initially not particularly adapted.

Specific features or activity may include outside and sunny activity, sport activity etc.

To this end, the present invention allows to generate modified eyeglass frame manufacturing data based on an existing eyeglass frame and on a target specific activity or feature.

An object of the present invention is therefore to provide a method for generating modified eyeglass frame manufacturing data according to claim 1.

The manufacturing data designate all data needed to manufacture the modified eyeglass frame. It can comprise or be derived from the pantoscopic angle, the face form angle, the base curve, the temple shape, the wrap angle etc.

In a particular embodiment, the method according to the disclosure provides in a fully automated manner a fully or partially customized eyeglasses frame to a human individual.

In particular, steps (d) and (e), and in an embodiment step (c), are fully automated; the modifying and computing, and in an embodiment the determining, being thus done using at least one processor to generate modified eyeglass frame manufacturing data based on said predetermined conception rule

The providing and selecting steps allow providing a pre-existing eyeglass frame. The pre-existing eyeglass frame can be an eyeglass frame which has already been used and has corresponding lenses designed to correct vision. In that case, the plurality of eyeglass frames among which the one selected framed is selected corresponds to the plurality of preexisting eyeglass frames among which the user chose the eyeglass frame she/he wanted to modify.

Alternatively, the pre-existing eyeglass frame can be a new eyeglass frame which is chosen among a plurality of eyeglass frame e.g. at an optician store, or on a catalogue. In that case, at the time of its selection, the eyeglass frame can be wearing mere demonstration lenses which are not designed for correcting the wearer's vision. In case it is chosen on a catalogue, the eyeglass wear may even have no materiality at the time step b is performed.

The data determined at the determining step (step c) and modified at the modifying step (step d) can comprise any data relating to the aspect or mechanicals of the eyeglass frame such as the pantoscopic angle, the face form angle, the base curve, the temple shape, the wrap angle etc.

The at least one conception rule of the modifying step is meant to preserve the aesthetics or the spirit of the preexisting eyeglass frame whilst keeping the modification possible. For instance, it may be important to make sure some parameters are modified together so as to respect a given ratio, or to keep some angles below a given threshold to allow the eyeglass frame to be able to stand on a nose etc.

The conception rule will depend on the target specific activity and/or feature.

For instance, for sports or outside / sunny activity parameters can be modified to increase face coverage, so as to improve sun protection (UV, glare..): pantoscopic angle, face form angle, base curve, Z thickness can be modified to fit with the face morphology and limit the light coming to the eye from top or bottom or side; the temple shape can also be modified to reduce the amount of light coming from the side.

Similarly, for driving activities the base curve, the pantoscopic angle, and the wrap angle can be modified so as to increase the field of vision of the wearer and limit back reflection coming from car headlight at night. The temple thickness can also be reduced to increase peripheral visibility.

In case of electrochromic lens, or more generally eyewear integrating electronic, the temple can be modified so as to include a slot that will receive an electronic board, a battery, wiring etc. Eyewear face can also be modified so that it includes wiring, sensor inside.

The conception rule of step d according to the invention comprises keeping unchanged a frontal 2D projection of the selected frame.

Indeed, the 2D projection of the selected frame corresponds to the image seen by some one standing in front of the wearer. As such, if this 2D projection is kept the same, the spirit and identity of the eyeglass frame is conserved.

Finaly the computing steps (step e) consists in computing those modified data so that they can actually be used as input by frame manufacturer for eyeglasses.

The method according to the invention can further comprise a step c1 consisting in providing, or selecting from a plurality of activies or classes of frames, a target activity or target class of frames for which the modified eyeglass frame is intended.

Depending on the provided activity or target class of frame, a different conception rule can be selected.

Preferably, the activity for which the modified eyeglass frame is intended is chosen among sport activity, sunny activity, and driving.

The conception rule of the modifying step can also comprise keeping constant an eyewear feature chosen among temple size, size of the connection to the temple, nose bridge size and nose shape.

These features are features which are specific to some wearers and which, if modified, could prevent the wearer to wear the eyeglass frame.

The conception rule of the modifying step can also comprise keeping constant a feature of the selected frame chosen among color, transparency, opacity, pattern, decorative features. These features can allow preserving the spirit and identity of the eyeglass frame to be modified.

The conception rule of the modifying step can also comprise fitting the eyeglass frames to 3D measurements of the head of a wearer.

Such fitting allows personalizing the eyeglass frame as much as possible for the wearer and provide the best possible wearing experience.

The conception rule of the modifying step can also comprise modifying a data chosen among pantoscopic angle, base curve, wrap angle, front face thickness and temple thickness.

The conception rule of the modifying step can also comprise modifying data chosen among pantoscopic angle, base curve, wrap angle, front face thickness and temple thickness while maintaining sensibly constant a projected view of the front face of the eyeglass frame.

These data can have a very dramatic effect on the possible application of the eyeglass frame, as discussed hereabove.

At least one of the eyeglass frames provided among the plurality of eyeglass frames of step a can be a digital frame.

Using a digital frame as a starting point allows saving material, which can be particularly critical in case of expensive eyeglass frames.

At least one of the eyeglass frames provided among the plurality of eyeglass frames of step a can be a physical frame.

Using a physical frame can allow a more accurate and sure choice for the wearer. It can also allow actually trying the eyeglass frame.

At least one of the eyeglass frames provided among the plurality of eyeglass frames of step a can be a picture of a frame.

Such picture can be provided by a user and come from any source such as a magazine or a movie.

The plurality of eyeglass frames of the providing step (step a) can of course comprise any combination of digital frames, physical frames, and picture of frames.

Preferably, the modified eyeglass frame manufacturing data allows the modified eyeglass frame to integrate an electronic compound.

The invention can be better understood at the reading of the detailed examples below, which constitute non-limitative embodiments of the present invention and at the examining of the annexed drawing, on which:
- figure 1 is an illustration of the curvature diagram of the half outer frame shape,
- figure 2 shows three different sizes of the same frame design than figure 1,
- figure 3 shows four view of a classic frame and of a sport frame,
- figure 4 shows an initial eyewear for clear lens,
- figure 5 shows the eyewear of figure 4 modified for improving protection vs light for outdoor-sunny activity, and
- figure 6 summarizes an example of process according to the invention.

The processor(s) within the terms of the disclosure may comprise dedicated hardware as well as hardware capable of executing software in association with appropriate software. This may consist in a single dedicated processor, a single shared processor, or a plurality of individual processors, some of which may be shared. Moreover, explicit use of the term "processor" should not be construed as referring exclusively to hardware capable of executing software, but refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as e.g. an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

A computer-implemented method according to the disclosure is for providing an eyeglasses frame.

In a particular embodiment, the method according to the disclosure provides in a fully automated manner a fully or partially customized eyeglasses frame to a human individual.

In the context of the present example, a method is provided wherein
1) a user select an existing eyewear, either a physical eyewear, a digital eyewear, or an image of an eyewear. The choice is based on design or aesthetic criteria. The selection process can be done via a physical try on, or a virtual try on, e.g with augmented reality technology. Selection can be based on eyewear shape, size, colour or pattern, decoration, material characteristics, brand etc.
2) the user is then asked to provide the activity the eyewear is intended for, or the activity he/she will have with his/her eyeglasses, or an extra features the initial eyewear does not offer. The activity can be one of a variety of sport activities, outside & sunny activity, driving activity etc. A wearer can provide a coefficient to weight each activity provided based e.g. on time spent for the activity, or on the importance of activity. The extra feature can be the inclusion of smart component, such as Electrochromic lens or electronic component in the eyewear
3) the existing eyewear is then modified according to the activities/extra features selected, but the eyewear design is kept similar: the face global design is preserved.

The 2D frame design, ie a projected view of the front, is kept similar during the modification some other specific eyewear features can be kept constant. Some locations on the eyewear have specific slope or curvature, or variation of curvature which can be preserved. Size of the connection to the temple, nose bridge size and nose shape are kept constant to ensure similar wearer comfort to initial eyewear.

To preserve the face global design there is a need for a set of locations in the eyewear for which the slope or curvature variation must be preserved, for inner or outer frame shape.

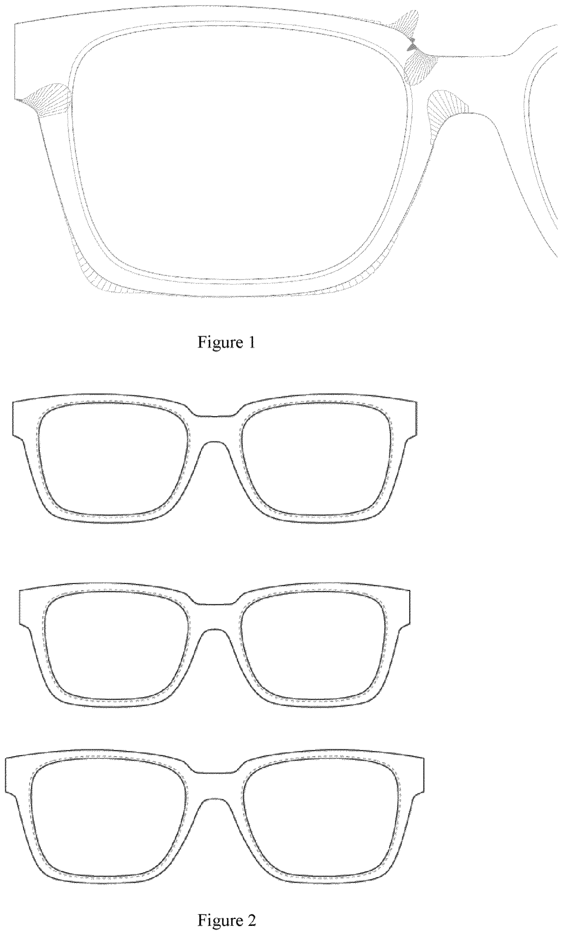

Figure 1 is an illustration of the curvature diagram of the half outer frame shape. This design finger print can be used to change the size of the frame whilst keeping the design.

Figure 2 shows three different sizes of the same frame design.

Preferably but optionally, the color, transparency/opacity, pattern, decorative features such as metal or inserts, are kept the same.

Other parameters are then modified so as to comply with the desired activity or extra features.

For example, for sport activity, the size of the connection to the temple and end point size can be increased so as to improve robustness.

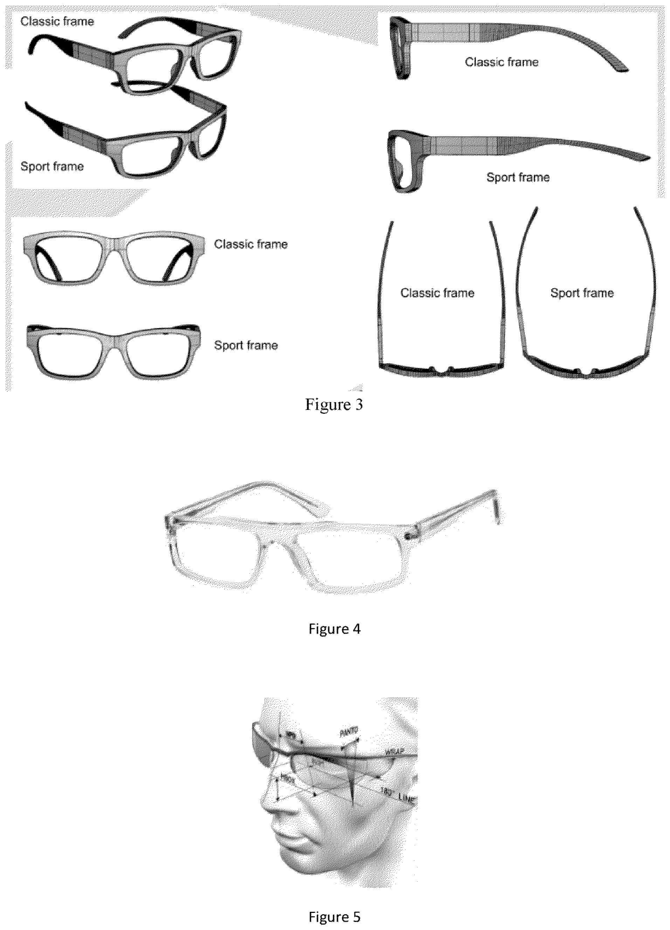

The temple geometry can also be modified to provide improved stability for sport activity, as shown on figure 3. Figure 3 comprises four view of a classic frame corresponding to the pre-existing frame to be modified and of a sport frame corresponding to the target frame after the data have been modified based on conception rule.

Alternately, for improving protection vs light for outdoor-sunny activity, some different modifications can be made. Obviously, clear eyewear will be transformed into sun eyewear. However, these modifications relate to the lenses and not additional modification relating to the frame could be needed. Initial eyewear for clear lens typically presents low base curve, low wrap angle, and limited face coverage, as shown on figure 4.

The modified eyeglass frame can have a modified wrap angle, a modified pantoscopic angle, and a modified base curve so as to provide more face coverage, as illustrated on figure 5.

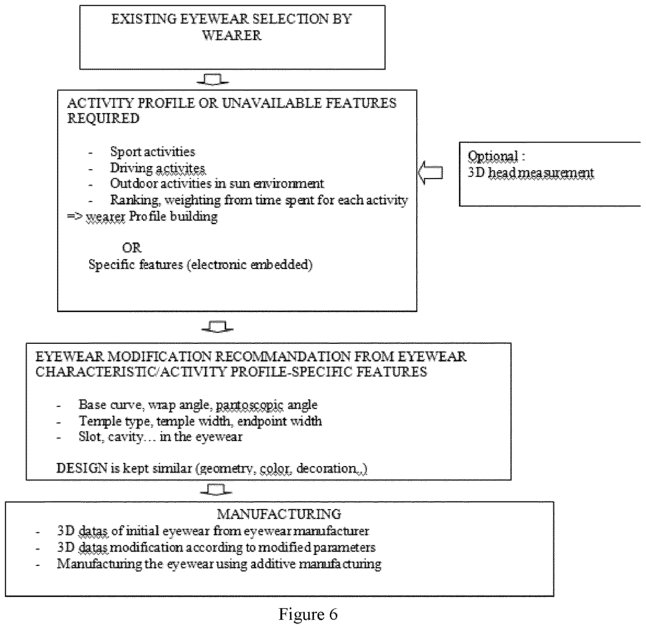

The global process is summarized on figure 6. An existing eyewear is first selected by the wearer (top box). Optionally, tridimensional head measurements are made on the wearer (second line right box). The previously introduced activity profile or unavailable features are provided by the wearer (second line central box).

Based on the aforementioned inputs, eyewear modification data are provided so as to keep the design similar whilst providing the desired features (third line box).

Based on these data, it is then possible to manufacture the modified eyewear. The manufacturing can be done using additive manufacturing, i.e. 3D printing.

The method according to the invention is computer-implemented. Namely, a computer program product comprises one or more sequences of instructions that are accessible to a processor which may be the above-mentioned at least one processor and that, when executed by the processor, cause the processor to carry out steps of the method for providing an eyeglasses frame as described above.

The method according to the disclosure is implemented in a calculation engine. Namely, the above-mentioned at least one processor comprises software and/or hardware making it possible, whatever the modification(s) requested by the user on any item or in any location or region or area of the frame, to automatically perform instantaneous recalculation of all the parameters and variables of the frame, including parameters the modification of which is not requested by the user, but which are modified as a consequence of the modification(s) requested by the user.

It is understood that the described embodiments are not restrictive and that it is possible to make improvements to the invention without leaving the framework thereof.

Unless otherwise specified, the word "or" is equivalent to "and/or". Similarly, the word 'one' is equivalent to 'at least one' unless the contrary is specified. Unless otherwise specified, all percentages are weight percentages.

## Claims

1. Method for generating modified eyeglass frame manufacturing data comprising the following steps:
a. providing a plurality of eyeglass frames,
b. selecting one frame among the plurality of eyeglass frames,
c. determining data relative to the selected frame,
d. modifying the determined data whilst respecting at least one predetermined conception rule, so as to obtain modified data, and
e. computing the modified data obtained by said modification so as to generate modified eyeglass frame manufacturing data,
**characterized in that**:
the conception rule of step d comprises keeping unchanged a frontal 2D projection of the selected frame;
steps d and e are fully automated; and
it further comprises at least one of the following:
a step c1 consisting in providing an activity for which the modified eyeglass frame is intended; and
the modified eyeglass frame manufacturing data allows the modified eyeglass frame to integrate an electronic compound.

2. Method according to the preceding claim, wherein the activity for which the modified eyeglass frame is intended is chosen among sport activity, sunny activity, and driving.

3. Method according to any which one of the preceding claims, wherein the conception rule of step d comprises keeping constant an eyewear feature chosen among temple size, size of the connection to the temple, nose bridge size and nose shape.

4. Method according to any which one of the preceding claims, wherein the conception rule of step d comprises keeping constant a feature of the selected frame chosen among color , transparency, opacity, pattern, decorative features.

5. Method according to any which one of the preceding claims, wherein the conception rule of step d comprises fitting the eyeglass frames to 3D measurements of the head of a wearer.

6. Method according to any which one of the preceding claims, wherein the conception rule of step d comprises modifying a data chosen among pantoscopic angle, base curve, wrap angle, and temple thickness.

7. Method according to any which one of the preceding claims, wherein at least one of the eyeglass frames provided among the plurality of eyeglass frames of step a is a digital frame.

8. Method according to any which one of the preceding claims, wherein at least one of the eyeglass frames provided among the plurality of eyeglass frames of step a is a physical frame.

9. Method according to any which one of the preceding claims, wherein at least one of the eyeglass frames provided among the plurality of eyeglass frames of step a is a picture of a frame.

## Patentansprüche

1. Verfahren zum Erzeugen modifizierter Brillengestell-Herstellungsdaten, umfassend die folgenden Schritte:
a. Bereitstellen einer Mehrzahl von Brillengestellen,
b. Auswählen eines Gestells unter der Mehrzahl von Brillengestellen,
c. Bestimmen von Daten in Bezug auf das ausgewählte Gestell,
d. Modifizieren der bestimmten Daten, während wenigstens eine vorbestimmte Konzeptionsregel berücksichtigt wird, um modifizierte Daten zu erhalten, und
e. Berechnen der modifizierten Daten, welche durch die Modifikation erhalten werden, um modifizierte Brillengestell-Herstellungsdaten zu erzeugen,
**dadurch gekennzeichnet, dass**:
die Konzeptionsregel von Schritt d umfasst, dass eine frontale 2D-Projektion des ausgewählten Gestells unverändert bleibt;
die Schritte d und e vollständig automatisiert sind; und
es ferner wenigstens eines der folgenden umfasst:
einen Schritt c1, welcher in einem Bereitstellen einer Aktivität besteht, für welche das modifizierte Brillengestell bestimmt ist; und
die modifizierten Brillengestell-Herstellungsdaten dem modifizierten Brillengestell ermöglichen, eine elektronische Zusammensetzung zu integrieren.

2. Verfahren nach dem vorhergehenden Anspruch, wobei die Aktivität, für welche das modifizierte Brillengestell bestimmt ist, ausgewählt wird aus einer Sportaktivität, einer sonnigen Aktivität und einem Fahren.

3. Verfahren nach einem der vorhergehenden Ansprüche, wobei die Konzeptionsregel aus Schritt d umfasst, dass ein Sehhilfe-Merkmal, ausgewählt aus einer Bügelgröße, einer Größe der Verbindung zu dem Bügel, einer Nasensteggröße und einer Nasenform, konstant bleibt.

4. Verfahren nach einem der vorhergehenden Ansprüche, wobei die Konzeptionsregel aus Schritt d umfasst, dass ein Merkmal des ausgewählten Gestells, ausgewählt aus einer Farbe, einer Transparenz, einer Lichtundurchlässigkeit, einem Muster und dekorativen Merkmalen, konstant bleibt.

5. Verfahren nach einem der vorhergehenden Ansprüche, wobei die Konzeptionsregel aus Schritt d ein Anpassen der Brillengestelle an 3D-Messungen des Kopfs eines Trägers umfasst.

6. Verfahren nach einem der vorhergehenden Ansprüche, wobei die Konzeptionsregel aus Schritt d ein Modifizieren von Daten, ausgewählt aus einem pantoskopischen Winkel, einer Basiskrümmung, einem Umschlingungswinkel und einer Bügeldicke, umfasst.

7. Verfahren nach einem der vorhergehenden Ansprüche, wobei wenigstens eines der Brillengestelle, welches aus der Mehrzahl von Brillengestellen von Schritt a bereitgestellt wird, ein digitales Gestell ist.

8. Verfahren nach einem der vorhergehenden Ansprüche, wobei wenigstens eines der Brillengestelle, welches aus der Mehrzahl von Brillengestellen von Schritt a bereitgestellt wird, ein physisches Gestell ist.

9. Verfahren nach einem der vorhergehenden Ansprüche, wobei wenigstens eines der Brillengestelle, welches aus der Mehrzahl von Brillengestellen von Schritt a bereitgestellt wird, ein Bild eines Gestells ist.

## Revendications

1. Procédé de génération de données de fabrication de monture de lunettes modifiée comprenant les étapes suivantes consistant à :
a. fournir une pluralité de montures de lunettes,
b. sélectionner une monture parmi la pluralité de montures de lunettes,
c. déterminer des données relatives à la monture sélectionnée,
d. modifier les données déterminées tout en respectant au moins une règle de conception prédéterminée, de manière à obtenir des données modifiées, et
e. calculer les données modifiées obtenues par ladite modification de manière à générer des données de fabrication de monture de lunettes modifiée,
**caractérisé en ce que** :
la règle de conception de l'étape d comprend le maintien inchangé d'une projection 2D frontale de la monture sélectionnée ;
les étapes d et e sont entièrement automatisées ; et
il comprend en outre au moins l'un des éléments suivants :
une étape c1 consistant à fournir une activité pour laquelle la monture de lunettes modifiée est destinée ; et
les données de fabrication de monture de lunettes modifiée permettent à la monture de lunettes modifiée d'intégrer un composé électronique.

2. Procédé selon la revendication précédente, dans lequel l'activité pour laquelle la monture de lunettes modifiée est destinée est choisie parmi une activité sportive, une activité au soleil et la conduite.

3. Procédé selon l'une quelconque des revendications précédentes, dans lequel la règle de conception de l'étape d comprend le maintien constant d'une caractéristique de lunetterie choisie parmi la taille des branches, la taille du raccord à la branche, la taille du pont nasal et la forme du nez.

4. Procédé selon l'une quelconque des revendications précédentes, dans lequel la règle de conception de l'étape d comprend le maintien constant d'une caractéristique de la monture sélectionnée choisie parmi des caractéristiques de couleur, de transparence, d'opacité, de motif, de décoration.

5. Procédé selon l'une quelconque des revendications précédentes, dans lequel la règle de conception de l'étape d comprend l'ajustement des montures de lunettes à des mesures 3D de la tête d'un porteur.

6. Procédé selon l'une quelconque des revendications précédentes, dans lequel la règle de conception de l'étape d comprend la modification d'un élément de données choisi parmi l'angle pantoscopique, la courbure de la base, l'angle de cintrage et l'épaisseur de branche.

7. Procédé selon l'une quelconque des revendications précédentes, dans lequel au moins l'une des montures de lunettes fournies parmi la pluralité de montures de lunettes de l'étape a est une monture numérique.

8. Procédé selon l'une quelconque des revendications précédentes, dans lequel au moins l'une des montures de lunettes fournies parmi la pluralité de montures de lunettes de l'étape a est une monture physique.

9. Procédé selon l'une quelconque des revendications précédentes, dans lequel au moins l'une des montures de lunettes fournies parmi la pluralité de montures de lunettes de l'étape a est une image d'une monture.
